(19) Europäisches Patentamt
European Patent Office
Office européen des brevets

(11) **EP 2 092 368 B1**

(12) **EUROPÄISCHE PATENTSCHRIFT**

(45) Veröffentlichungstag und Bekanntmachung des Hinweises auf die Patenterteilung:
**09.11.2011 Patentblatt 2011/45**

(51) Int Cl.:
***G01S 13/95*** (2006.01)

(21) Anmeldenummer: **07803522.7**

(22) Anmeldetag: **17.09.2007**

(86) Internationale Anmeldenummer:
**PCT/EP2007/059761**

(87) Internationale Veröffentlichungsnummer:
**WO 2008/058786 (22.05.2008 Gazette 2008/21)**

(54) **VERFAHREN UND VORRICHTUNG ZUM ERKENNEN VON NIEDERSCHLAG MITTELS RADAR**

METHOD AND DEVICE FOR DETECTING PRECIPITATION USING RADAR

PROCÉDÉ ET DISPOSITIF POUR LA RECONNAISSANCE DE PRÉCIPITATION À L'AIDE DE RADIODÉTECTION

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **17.11.2006 DE 102006054320**

(43) Veröffentlichungstag der Anmeldung:
**26.08.2009 Patentblatt 2009/35**

(73) Patentinhaber: **Robert Bosch GmbH**
**70442 Stuttgart (DE)**

(72) Erfinder: **ARAGE HASSEN, Alebel**
**71229 Leonberg (DE)**

(56) Entgegenhaltungen:
**US-A- 5 028 929 US-A- 5 500 646**

• **SENBOKUYA Y ET AL: "Development of the spaceborne dual frequency precipitation radar for the global precipitation measurement mission" GEOSCIENCE AND REMOTE SENSING SYMPOSIUM, 2004. IGARSS '04. PROCEEDINGS. 2004 IEEE INTERNATIONAL ANCHORAGE, AK, USA 20-24 SEPT. 2004, PISCATAWAY, NJ, USA, IEEE, Bd. 5, 20. September 2004 (2004-09-20), Seiten 3570-3573, XP010750760 ISBN: 0-7803-8742-2**
• **TAKAHASHI N ET AL: "The characteristics of system noise of TRMM/PR and their application to the rain detection algorithm" GEOSCIENCE AND REMOTE SENSING SYMPOSIUM, 2004. IGARSS '04. PROCEEDINGS. 2004 IEEE INTERNATIONAL ANCHORAGE, AK, USA 20-24 SEPT. 2004, PISCATAWAY, NJ, USA,IEEE, Bd. 2, 20. September 2004 (2004-09-20), Seiten 910-913, XP010751039 ISBN: 0-7803-8742-2**

EP 2 092 368 B1

**Beschreibung**

Die Erfindung betrifft ein Verfahren zum Erkennen von Niederschlag in einem von Radarstrahlen erfassten Bereich gemäß dem Anspruch 1, eine Vorrichtung, um dieses Verfahren durchzuführen, ein Computerprogramm sowie ein Computerprogrammprodukt.

Stand der Technik

Niederschlag, wie beispielsweise Regen, Hagel, Nebel oder Schneefall, lässt sich mittels Radar erkennen. Beispielsweise lässt sich in der Meteorologie die Niederschlagsintensität mittels Radar bestimmen, indem eine gerichtete Antenne impulsförmig elektromagnetische Strahlung im Mikrowellenbereich abstrahlt. Dazu kann ein Radarsystem eingesetzt werden, dass Radarstrahlen mit einer Wellenlänge von etwa 3 bis 10 cm abstrahlt. Trifft die Strahlung in der Atmosphäre auf ein Partikel, dessen Durchmesser größer als etwa 0,2 mm ist, so wird die Strahlung von diesem reflektiert. Dabei ändert sich die Wellenlänge der Strahlung nicht. Ein Teil dieser Strahlung wird von einem Empfangsgerät des Radars aufgenommen und es wird die Reflektivität gemessen. Aus der Reflektivität kann die Niederschlagsintensität berechnet werden, wenn gewisse Annahmen über die Partikel- bzw. Tropfengrößenverteilung des Niederschlags getroffen werden. Eine Umrechnung erfolgt dann mit einer so genannten Z-R-Beziehung, wobei Z für Reflektivität und R für die Niederschlagsintensität steht.

Die WO 1993002370 A1 beschreibt ein Verfahren zur Erkennung von Regen. Dabei werden mehrere Radarsignale ausgesendet. Rückgestreute Signale werden empfangen, um ein Doppler-Spektrum zu erzeugen. Eine verringerte Amplitude in dem Doppler-Spektrum, insbesondere in den Randbereichen des Spektrums, deutet auf Regen hin.

Die EP 1229348 A1 beschreibt ein System zur Erkennung von Regen oder Hagel mittels eines Wetterradars. Dazu werden unterschiedliche Standardabweichungs- und Rückstrahltintensitätskarten miteinander kombiniert.

Die JP 07248830 A beschreibt im Zusammenhang mit einem Radar ein Gerät zur Korrektur einer berechneten Regenintensität.

Die JP 10048333 A beschreibt ein Radargerät mit dem sich Schneefall oder Regen erkennen lässt, indem ein reflektiertes Signal empfangen und dessen Pegel gemessen wird.

Ein Verfahren zum Erkennen von Niederschlägen mittels zweier Radarstrahlen für Flugzeuge ist aus der US 5,028,929 bekannt. Hierbei werden wenigstens zwei Radarsignale ausgesendet, wobei die Größen zurückgestreuter Radarsignale ermittelt werden. Eine Feststellung eines Vorhandenseins von Niederschlag erfolgt durch Vergleich der so ermittelten Dämpfungscharakteristiken der beiden rückgestreuten Radarsignale.

Ein ähnlicher Stand der Technik ist aus dem Dokument SENBOKUYA Y ET AL: "Development of the spaceborne dual frequenca precipitation radar for the global precipitation measurement mission" GEOSCIENCE AND REMOTE SENSING SYMPOSIUM; 2004. IGARSS #04. PROCEEDINGS. 2004 IEEE INTERNATIONAL ANCHORAGE, AK, USA 20-24 SEPT. 2004, PISCATAWAY, NJ, USA, IEEE, Bd. 5,20. September 2004, Seiten 3570-3573, XP010750760, ISBN: 0-7803-8742-2" bekannt.

Offenbarung der Erfindung

Vor diesem Hintergrund wird mit der vorliegenden Erfindung ein Verfahren zum Erkennen von Niederschlag in einem von Radarstrahlen erfassten Bereich, weiterhin eine Vorrichtung, die dieses Verfahren verwendet, sowie schließlich ein entsprechendes Computerprogramm und ein Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Bei dem erfindungsgemäßen Verfahren zum Erkennen von Niederschlag in einem von Radarstrahlen erfassten Bereich wird eine erste mittlere Leistung eines ersten rückgestreuten Radarsignals und eine zweite mittlere Leistung eines zweiten rückgestreuten Radarsignals ermittelt. Erfindungsgemäß wird ein Vorhandensein von Niederschlag durch einen Vergleich der mittleren Leistungen miteinander bestimmt

Eine Bestimmung der Übereinstimmung der mittleren Leistungen erfolgt erfindungsgemäß unter Berücksichtigung von mindestens einem Gewichtungsfaktor, wobei der mindestens eine Gewichtungsfaktor ausgebildet ist, um unterschiedliche Radarantennencharakteristika auszugleichen. Durch die Verwendung von Gewichtungsfaktoren lassen sich die mittleren Leistungen auch dann vergleichen, wenn die zu Grunde liegenden Radarsignale von unterschiedlich ausgebildeten Radarsendern stammen. Dies erhöht die Flexibilität des erfindungsgemäßen Verfahrens.

In einer bevorzugten Ausfiihrungsform wird eine Übereinstimmung der mittleren Leistungen mittels Korrelation der jeweils ermittelten mittleren Leistungen ermittelt.

In einer vorteilhaften Ausgestaltung des erfindungsgemäßen Verfahrens erfolgt ein Ermitteln einer weiteren mittleren Leistung eines weiteren rückgestreuten Radarsignals.

Die Auswertung von mehr als zwei rückgestreuten Radarsignalen erhöht die Genauigkeit der Erkennung von Niederschlag. Bei den rückgestreuten Radarsignalen kann es sich um Reflektionen von Radarsignalen handeln, die von benachbart angeordneten Radarsendern ausgesendet werden.

Gemäß einer bevorzugten Ausführungsform werden die mittleren Leistungen jeweils für einen objektfreien Abschnitt des erfassten Bereichs ermittelt.

Nach einer Ausführungsform wird zum Ermitteln der mittleren Leistungen, jeweils eine spektrale Leistungsdichte für jedes rückgestreute Radarsignal erfasst und über den objektfreien Abschnitt aufintegriert.

Gemäß einer bevorzugten Ausgestaltung des erfindungsgemäßen Verfahrens, kann der objektfreie Abschnitt durch eine Analyse der spektralen Leistungsdichten der rückgestreuten Radarsignale bestimmt werden. Dabei entspricht der objektfreie Abschnitt einem gemeinsamen Teilbereich der spektralen Leistungsdichten, in dem keine der spektralen Leistungsdichten einen Peak aufweist, der über ein Grundrauschen der jeweiligen spektralen Leistungsdichte herausragt.

Gemäß einer weiteren bevorzugten Ausführungsform kann eine Dichte des Niederschlags oder eine Radarsignaldämpfung bestimmt werden. Dies kann durch ein Auswerten eines Anstiegs des Grundrauschens mindestens einer der spektralen Leistungsdichten erfolgen.

Bei dem Niederschlag kann es sich beispielsweise um Regen, Schneefall, Nebel oder Hagel handeln. Eine Hauptbewegungsrichtung des Niederschlags kann orthogonal zu den Radarstrahlen sein. Vorteilhafterweise lässt sich der Niederschlag gemäß dem erfindungsgemäßen Ansatz ohne Auswertung eines Dopplereffektes erkennen.

Gemäß einer bevorzugten Ausführungsform wird ein Long Range Radar-FMCW-Radarsender verwendet, um teilweise überlappende oder benachbarte Radarstrahlungskegel zu erzeugen. Die rückgestreuten Radarsignale können dabei jeweils einem Strahlungskegel zugeordnet sein. FMCW-Radar (engl. Frequency Modulated Continuous Wave), auch moduliertes Dauerstrichradar genannt, ist ein Radarsignal mit sich ständig ändernder Frequenz. Die Frequenz steigt entweder linear an, um bei einer bestimmten Frequenz abrupt auf den Anfangswert wieder abzufallen (Sägezahnmuster), oder sie kann abwechselnd mit konstanter Änderungsgeschwindigkeit steigen und fallen. Durch eine derartige lineare Änderung der Frequenz und ein gleichzeitiges stetiges Senden ist es möglich, neben der Differenzgeschwindigkeit zwischen Sender und Objekt auch gleichzeitig deren absolute Entfernung voneinander zu ermitteln.

Eine erfindungsgemäße Vorrichtung führt alle Schritte des erfindungsgemäßen Verfahrens durch.

Das erfindungsgemäße Computerprogramm mit Programmcodemitteln ist dazu ausgelegt alle Schritte des erfindungsgemäßen Verfahrens durchzuführen, wenn dieses Computerprogramm auf einem Computer oder einer entsprechenden Recheneinheit, insbesondere einer erfindungsgemäßen Vorrichtung, durchgeführt wird.

Das erfindungsgemäße Computerprogrammprodukt mit Programmcodemitteln, die auf einem computerlesbaren Datenträger gespeichert sind, ist zur Durchführung des erfindungsgemäßen Verfahrens vorgesehen, wenn dieses Computerprogramm auf einem Computer oder einer entsprechenden Recheneinheit, insbesondere einer erfindungsgemäßen Vorrichtung, durchgeführt wird.

Der vorliegenden Erfindung liegt die Erkenntnis zu Grunde, dass Radarsensoren durch Auftritt von Niederschlag im Signalübertragungsmedium, je nach Betriebsfrequenz, unterschiedlich degradiert werden. Bei dem Niederschlag kann es sich beispielsweise um Regen bzw. Schneefall handeln. Der Effekt der Degradierung tritt besonders bei höheren Frequenzen auf, wie sie beispielsweise bei Automotivradarsensoren verwendet werden und kann je nach Niederschlagsstärke unterschiedliche Degrationsgrade des Radarsignals hervorrufen. Beim Long Range Radar bzw. Fernbereichsradar werden mehr als zwei Strahlungskegel bzw. Antennenbeams zur Lokalisierung von Objekten im Verkehrsszenario benutzt. Vorgesehene Empfänger bzw. Sensoren werden im Straßenverkehr die gleiche Intensität 1 nur dann empfangen, wenn das ausgestrahlte Radarsignal von einem eine Radarzelle homogen bzw. gleichmässig ausfüllenden Objekt, wie etwa Regen, rückgestreut wird. Die Radarzelle entspricht hierbei dem Sichtfeld bzw. Fietd-of-View des Radars.

Der erfindungsgemäße Ansatz kann für eine Vielzahl von Anwendungen eingesetzt werden. In erster Linie ermöglicht die vorliegende Erfindung eine Erkennung eines Niederschlagauftrittes in dem Radarsignalübertragungsmedium. Ferner kann eine Intensität des Niederschlags bestimmt werden und ein Radarsenderperformanceverlust abgeschätzt werden. Um eine eingeschränkte Funktionalität des Radarssenders bei schlechten Wetterbedingungen aufrechtzuerhalten, kann die vorliegende Erfindung zur Umschaltung bzw. Anpassung des Systems, z.B. eines Modulationssystems, an das aktuelle Signalübertragungsmedium eingesetzt werden. D.h., es ist beispielsweise denkbar, die Leistung der gesendeten Signale in Abhängigkeit von einem ermittelten Niederschlag zu variieren. Ein weiterer Vorteil des erfindungsgemäßen Ansatzes besteht darin, dass sich das erfindungsgemäße Verfahren zum Teil ohne Modifikation auf bestehende Automotive Radarsendern, die mindestens zwei Strahlungskegel erzeugen bestehen, anwenden lässt. Zukünftige Radarsender bzw. -systeme können so optimiert werden, dass sie die Vorteile der vorliegenden Erfindung ausnützen können. Zudem eignet sich der erfindungsgemäße Ansatz als Signalquelle für sicherheitsrelevante Systeme in Fahrzeugen.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im folgenden unter Bezugnahme auf die Zeichnungen ausführlich beschrieben.

Kurze Beschreibung der Zeichnungen

Figur 1 zeigt eine schematische Darstellung einer Verwendung eines Radarsystems im Straßenverkehr, gemäß einer Ausführungsform der vorliegenden Erfindung;

Figur 2 zeigt eine schematische Darstellung eines homogenen Mediums in einem von Radarstrahlen erfassten Bereich gemäß einer Ausfiihrungsfonn der vorliegenden Erfindung;

Figur 3 zeigt ein Radarsignalspektrum gemäß einer Ausführungsform der vorliegenden Erfindung;

Figur 4 zeigt ein Flussdiagramm einer bevorzugten Ausfiihrungsform des erfindungsgemäßen Verfahrens; und

Figur 5 zeigt ein Blockschaltbild einer bevorzugten Ausfiihrungsform der erfindungsgemäßen Vorrichtung.

Ausführungsformen der Erfindung

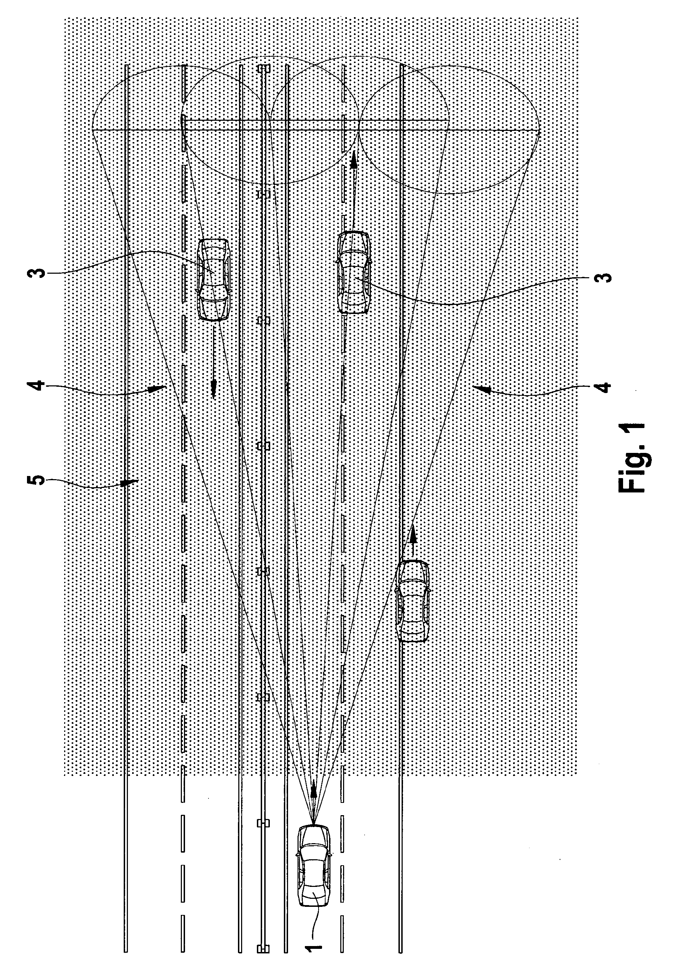

Fig.1 zeigt eine Anwendung eines Multi-Beam Automotive Radarsystems im Straßenverkehr. Ein Fahrzeug 1, auch Radar Vehicle genannt, ist mit einem Fernbereichsradarsystem bzw. Long Range Radar (LRR) ausgestattet. Das Radarsystem umfasst wenigstens einen Sender bzw. eine Antenne, wenigstens einen Empfänger bzw. Sensor, und Verarbeitungsmittel, wie etwa einen Microprozessor zur Auswertung von vom Empfänger erhaltener zurückgesteuerter Strahlung. Sender und Empfänger sind zweckmäßigerweise als eine Antenne, Sende- und Empfängerfunktionen erfüllt, ausgebildet.

Das Fahrzeug 1 bewegt sich auf einer Straße, die durch Abgrenzungen, beispielsweise in Form einer Schutzschiene bzw. Guard Rail, begrenzt sein kann. Auf der Straße bewegen sich weitere Fahrzeuge 3, die von dem Radar des Fahrzeugs 1 erfasst werden können. Zur Erfassung der Fahrzeuge 3 strahlt das Radar des Fahrzeugs 1 mehrere Radarkegel bzw. Antennenbeams 4 ab. Ein von den Antennenbeams 4 erfasster Bereich ist von Niederschlag, in diesem Fall von Regen 5, durchsetzt.

Die Hauptbewegungsrichtung des Niederschlags ist orthogonal zu den Radarstrahlen. In dem in Fig. 1 gezeigten Ausfiihrungsbeispiel werden die Radarstrahlen in horizontaler Richtung ausgestrahlt. Der Regen fällt in vertikaler Richtung.

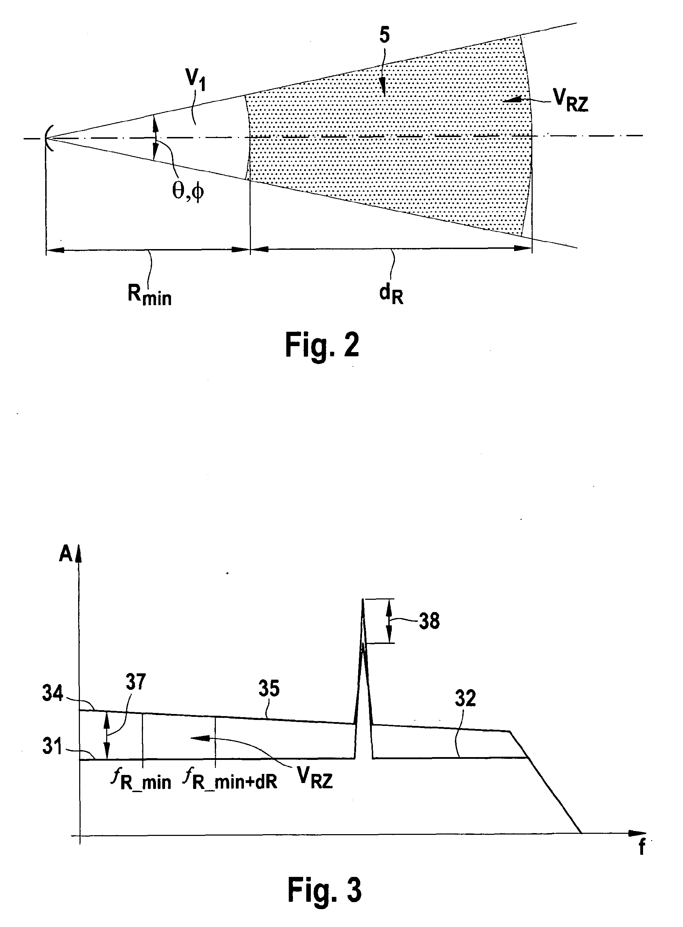

Fig. 2 zeigt eine schematische Darstellung von Regentropfen in einer Monostatik-Radarzelle. Bei der Radarzelle kann es sich um einen Bereich handeln, der von einem der in Fig. 1 gezeigten Strahlungskegel 4 erfasst wird. Die Monostatik-Radarzelle geht von einem sich am spitzen Ende des Strahlungskegels befindlichen Radar aus. Die Winkel $\theta$ und $\Phi$ geben dabei einen horizontalen bzw. vertikalen Antennenöffnungswinkel an. Die Radarzelle ist in zwei Abschnitte unterteilbar. Ein erster Abschnitt $V_1$ geht vom Radar aus und ist durch den Radius $R_{min}$ begrenzt. Der zweite Abschnitt $V_{RZ}$ grenzt an den ersten Abschnitt an, weist eine Länge von $d_R$ auf und ist somit durch den Radius $R_{min}+d_R$ begrenzt. Der zweite Abschnitt $V_{RZ}$ der Radarzelle ist von Regen 5 durchsetzt und stellt somit eine Regenzelle dar. Innerhalb der Regenzelle befinden sich außer dem Niederschlag in Form des Regens 5 keine inhomogenen Objekte, wie beispielsweise Fahrzeuge 3.

Bei der Messung mit dem Long Range Radar wird eine Radarwelle von einen sich am Fahrzeug 1 befindlichen Sender ausgestrahlt, am Objekt, beispielsweise einem Fahrzeug 3, reflektiert und von einem dem Sender zugeordneten Empfänger wieder aufgefangen. Die Laufzeiten und Dopplerverschiebungen, die dabei auftreten, werden bei Radarsensoren zur Bestimmung von Abstand und Relativgeschwindigkeit des Objektes benutzt. Beim Long Range Radar werden je nach Anforderung an die Radarsichtbreite mehrere Strahlungskegel 4 zur Lokalisierung von zu detektierenden Objekten im Verkehrsszenario benutzt. Dabei ergibt ein Objekt, z.B. für ein FMCW- Radarsystem, einen Peak im Spektrum, welcher von zwei benachbarten Strahlungskegeln gleichzeitig detektiert wird. Durch Analyse des Amplituden- und Phasenverhältnisses dieser benachbarten Kegel im so genannten "Monopulsverfahren" kann der Winkel zu dem Objekt festgestellt werden.

Fig.3 zeigt ein Signalspektrum am Beispiel des FMCW-Radar. Auf der horizontalen Achse ist die Frequenz f und auf der vertikalen Achse das Amplitudenspektrum A eines rückgestreuten Signals (Echo) aufgetragen.

Ein erstes Spektrum 31 zeigt einen Anwendungsfall, bei dem ein Radarsignal von einem festen Objekt reflektiert wird. Bei dem Objekt kann es sich beispielsweise um eines der in Fig. 1 gezeigten Fahrzeuge 3 handeln. Das Radarsignal wird nicht durch Niederschlag gedämpft. Das erste Spektrum 31 weist daher ein niedriges Grundrauschen 32 und einen hohen Peak auf. Der Peak, in Form einer Spitzenform, die deutlich aus dem Grundrauschen 32 herausragt, wird durch Reflektion des Radarsignals an dem Objekt hervorrufen.

Ein zweites Spektrum 34 zeigt einen Anwendungsfall, bei dem das Radarsignal wiederum von dem Objekt reflektiert wird. Zudem wird das Radarsignal durch Niederschlag gedämpft. Das zweite Spektrum 34 weist daher ein hohes Grundrauschen 35 auf. Das Grundrauschen 35 liegt deutlich über demjenigen des ersten Spektrums 31. Ferner weist das zweite Spektrum 34 einen niedrigereren Peak als das erste Spektrum 31 auf. Die Anhebung des Grundrauschens durch Niederschlag ist durch das Bezugszeichen 37 und eine Objekt-Peakreduzierung durch das Bezugszeichen 38 gekennzeichnet.

Signale, die von einem die Radarzelle homogen bzw. gleichmäßig ausfüllenden Stoff, wie etwa Niederschlag, reflektiert werden, ergeben keinen Peak im Spektrum des FMCW-Radars. Statt dessen ergibt sich eine im breiten Frequenzbereich verteilte Signalleistung, die das Grundrauschen 35 des zweiten Spektrums 34 deutlich anhebt. Diese Signalleistung wird von sämtlichen, der beispielsweise in Fig. 1 gezeigten Strahlungskegel 4 zurückreflektiert und lässt sich für einen objektfreien Abschnitt der Radarzelle aus der gemessenen Spektralleistungsdichte berechnen. Dies erfolgt beispielsweise nach dem Prinzip der Vielfach-Streuung erster Ordnung von schmalen Strahlungskegeln (engl. "Narrow-Beam First Order Multiple Scattering").

Die Lage des in Fig. 2 gezeigten, objektfreien Bereichs $V_{RZ}$ der Länge $d_R$ ist in Fig. 3 als der Spektralbereich gekennzeichnet, der sich zwischen den Frequenzen $f_{R\ min}$ und $f_{R\ min}+d_R$ befindet. Der durch die Frequenzen $f_{R\_min}$ und $f_{R\ min}+ d_R$ begrenzte Bereich gibt daher eine mittlere Regenrückstreuung aus der Regenzelle 5 an. Die vom Regen zurückgestreute mittlere Leistung wird durch Integration der mit LRR gemessenen Spektralleistungsdichte in dem Abschnitt $f_{R\ min}+d_R$ bis $f_{R\ min}+d_R + f_{dR}$ der Radarzelle nach dem erwähnten Vielfach-Streuungsprinzip berechnet. Daraus lässt sich die Regenintensität über den Rückstreuungsquerschnitt des Regens und damit die Radarsignaldämpfung bzw. der LRR-Performanceverlust bestimmen.

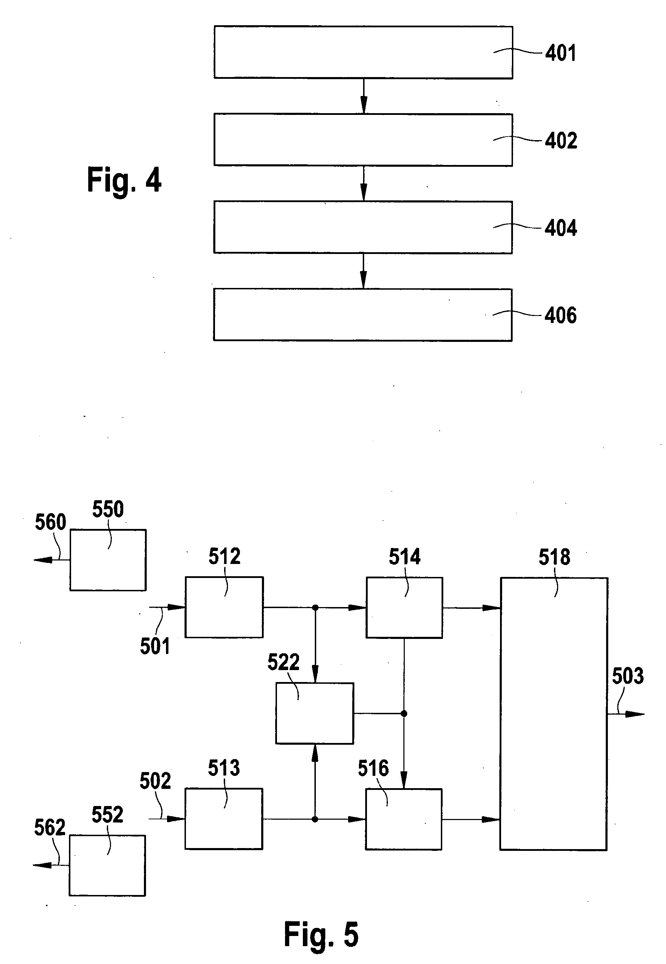

Fig. 4 zeigt ein Flussdiagramm eines Verfahrens zum Erkennen von Niederschlag in einem von Radarstrahlen erfassten Bereich gemäß einem bevorzugten Ausführungsbeispiel der vorliegenden Erfindung. In einem ersten Schritt 401 erfolgt ein Aussenden wenigstens zweier sich nicht oder nur teilweise überlappender Strahlungskegel mittels wenigstens eines entsprechenden Senders (Antenne). In einem weiteren Schritt 402 erfolgt ein Ermitteln einer ersten mittleren Leistung eines ersten rückgestreuten Radarsignals. In einem weiteren Schritt 404 erfolgt ein Ermitteln einer zweiten mittleren Leistung eines zweiten rückgestreuten Radarsignals. In einem dritten Schritt 406 erfolgt eine Feststellung sowie gegebenenfalls eine Anzeige eines Vorhandenseins von Niederschlag bei einer Übereinstimmung der mittleren Leistungen der beiden rückgestreuten Signale.

Bei dem von den Strahlungskegeln bzw. Radarstrahlen erfassten Bereich kann sich beispielsweise um den in Fig. 1 gezeigten Bereich handeln, der von den Strahlungskegeln 4 abgedeckt wird. Der Niederschlag kann den von Radarstrahlen erfassten Bereich, mit Ausnahme von vorhandenen festen Objekten, die bezüglich des erfassten Bereiches eine Inhomogenität darstellen, beispielsweise in Form der in Fig.1 gezeigten Fahrzeuge 3, gleichmäßig ausfallen. Im Gegensatz zu festen Objekten, die für Radarstrahlen undurchlässig sind, können Radarstrahlen in den Niederschlag teilweise eindringen.

Wie in Fig.1 gezeigt, können bei der Umsetzung des erfindungsgemäßen Verfahrens mehrere Strahlenkegel 4 eingesetzt werden. In dem in Fig. 1 gezeigten Ausführungsbeispiel werden vier Strahlenkegel eingesetzt. Demnach können für das erfindungsgemäße Verfahren weitere rückgestreute Radarsignale zum Erkennen von Niederschlag verwendet werden. In diesem Fall kann das erfindungsgemäße Verfahren eine oder mehrere weitere Schritte des Ermittelns einer oder mehrerer weiterer mittleren Leistungen aufweisen. Die weiteren mittleren Leistungen werden dabei aus den weiteren rückgestreuten Radarsignalen ermittelt. Die rückgestreuten Radarsignale können durch Reflektion von Radarsignalen erzeugt werden, die von benachbart angeordneten Radarsendern (Antennen) ausgesendet werden. In Fig.1 werden die Radarsignale von Radarsendern bzw. Antennen ausgesendet, die benachbart an einer Vorderseite des Fahrzeugs 1 angeordnet sind. Es ist ebenfalls denkbar, den gesamten durch die Strahlungskegel 4 abgedeckten Bereich mittels einer einzigen Antenne abzudecken, die zwischen dem Senden einzelner Strahlungskegel entsprechend verschwenkbar ausgebildet ist.

Haben alle der zur Erzeugung der rückgestreuten Radarsignale verwendeten Strahlungskegel 4 die gleichen Antennecharakteristika, so werden die zugehörigen Radarsensoren bzw. Empfänger die gleiche rückgestreute mittlere Intensität I wie folgt nachweisen:

$$I_{b1} = I_{b2} = I_{b3} = I_{b4} = \ldots = I_{bn}$$

$I_{bi}$ (i=1-n) steht dabei für die mittlere Intensität eines rückgestreuten Radarsignals des i-ten Strahlungskegels.

Weisen die Strahlungskegel unterschiedliche Antennecharakteristika auf, so können die mittleren Leistungen aneinander angepasst werden. Eine Bestimmung der Übereinstimmung der mittleren Leistungen I kann dann unter Berücksichtigung von mindestens einem Gewichtungsfaktor erfolgen, wobei der mindestens eine Gewichtungsfaktor ausgebildet ist, um unterschiedliche Radarantennencharakteristika auszugleichen.

Gemäß diesem Ausfiihrungsbeispiel lässt sich die mittlere Intensität mit Berücksichtigung der unterschiedlichen Antennencharakteristika folgendermaßen berechnen:

$$\alpha_{b1} I_{b1} = \alpha_{b2}\ I_{b2} = \alpha_{b3}\ I_{b3} = \alpha_{b4}\ I_{b4} = \ldots = \alpha_{bn}\ I_{bn}$$

Dabei stellen $\alpha_{bi}$ (i=I-n) die Gewichtungsfaktoren bzw. das Leistungsverhälmisse zwischen einem Strahlungskegel i und einem als Referenz ausgewählten Strahlungskegel, z.B dem Strahlungskegel mit der maximalen Leistung dar. Dieser Ansatz kann zur automatischen Erkennung von Niederschlag bei Verwendung aller Radararten eingesetzt werden.

Gemäß diesem Ausführungsbeispiel werden die mittleren Leistungen jeweils für einen objektfreien Abschnitt des erfassten Bereichs ermittelt. Dazu können die Schritte des Ermittelns jeweils einen Schritt des Erfassens einer spektralen Leistungsdichte des rückgestreuten Radarsignals und einen Schritt des Integrierens der spektralen Leistungsdichte, jeweils über den objektfreien Abschnitt, umfassen. Bezogen auf Fig. 3 bedeutet dies, dass beispielsweise eine Integration der zweiten Kennlinie 34 über den Abschnitt $f_{R\ min}$, $f_{R\ min+dR}$ erfolgt.

Der objektfreie Abschnitt kann durch Analysieren der spektralen Leistungsdichten der rückgestreuten Radarsignale bestimmt werden. Dabei entspricht der objektfreie Abschnitt einem gemeinsamen Teilbereich der spektralen Leistungsdichten, in dem keine der spektralen Leistungsdichten einen Peak aufweist. Ein solcher Peak ist **dadurch gekennzeichnet, dass** er sich deutlich über ein Rauschen der jeweiligen spektralen Leistungsdichte abhebt und somit ein festes, bezogen auf seine homogene Umgebung inhomogenes Objekt anzeigt. Ein solcher herausragender Peak ist in Fig. 3 gezeigt.

Gemäß dem dargestellten Ausführungsbeispiel kann eine Übereinstimmung der mittleren Leistungen mittels einer Korrelation der mittleren Leistungen ermittelt werden. Zeigt das Korrelationsergebnis eine Übereinstimmung der mittleren Leistungen an, so wurde ein homogenes verteiltes Medium wie etwa Niederschlag, erkannt. Dies kann beispielsweise durch ein Signal angezeigt werden.

Wie in Fig. 3 gezeigt, bewirkt Niederschlag in dem von Radarstrahlen erfassten Bereich, eine Anhebung des Grundrauschens. Durch Auswerten der Anhebung mindestens einer der spektralen Leistungsdichten kann eine Dichte des homogen verteilten Mediums, also beispielsweise eine Regenintensität, mittels einer Radarsignaldämpfung bestimmt werden. Die Anhebung kann beispielsweise durch Vergleich eines aktuellen Grundrauschens mit einem gespeicherten Referenzgrundrauschens erfolgen. Die Radarsignaldämpfung gibt an, wie stark ein Radarsignal durch den Niederschlag gedämpft wird. Werte, die die Dichte des homogen verteilten Mediums als auch die Radarsignaldämpfung angeben, können ebenfalls mittels Signalen angezeigt werden.

Fig. 5 zeigt eine Vorrichtung zum Erkennen von Niederschlag in einem von Radarstrahlen erfassten Bereich, gemäß einem Ausführungsbeispiel der vorliegenden Erfindung. Die Vorrichtung ist ausgebildet, um ein erstes rückgestreutes Radarsignal 501 und ein zweites rückgestreutes Radarsignal 502 zu empfangen und ein Feststellungs- bzw. Anzeigesignal 503 bereitzustellen, das ein Vorhandensein eines homogen verteilten Mediums wie etwa Niederschlag, anzeigt. Dazu weist die Vorrichtung zwei Sender 550, 552 zum Senden von Radarstrahlung bzw. Radarsignalen 560, 562 sowie zwei Empfänger 512, 513 zum Empfangen der rückgestreuten Radarsignale 501, 502 auf. Die Empfänger 512, 513 sind ausgebildet, um die Spektren der rückgestreuten Radarsignale 501, 502 an Ermittler 514, 516 bereitzustellen. Die Ennittler 514, 516 sind ausgebildet, um aus den Spektren die mittleren Signalleistungen zu berechnen und an eine Vergleichseinrichtung 518 bereitzustellen. Die Vergleichseinrichtung 518, beispielsweise in Form eines Korrelators, ist ausgebildet, um die mittleren Signalleistungen miteinander zu vergleichen. Bei einer Übereinstimmung der Signalleistungen wird davon ausgegangen, dass sich ein homogen verteiltes Medium in dem von den Radarstrahlen erfassten Bereich befindet. Zur Feststellung einer Übereinstimmung kann ein vorgegebener Toleranzbereich verwendet werden. Der Toleranzbereich kann sich an der Höhe des Grundrauschens orientieren.

Um den objektfreien Bereich zu ermitteln, kann die Vorrichtung einen Analysator 522 aufweisen, der ausgebildet ist, um aus den von den Empfängern 512, 513 bereitgestellten Spektren den objektfreien Bereich zu ermitteln und an die Ermittler 514, 516 bereitzustellen.

Gemäß dem erfindungsgemäßen Ansatz ist das Radarsignal orthogonal zum Niederschlag. Daher ist keine Dopplerauswertung möglich, sondern es erfolgt eine Ermittlung der Regenintensität über die Reflektivität und durch Integration der Regenrückstreuung bzw. der Rauschflooranhebung im Nahbereich, beispielsweise eines FMC W-Radarsystems.

Die Regen-Erkennung im Straßenverkehr erfolgt durch die Korrelation der mittleren Leistungen aus mehreren benachbarten Antennenarrays. Bei dem verwendeten Radarsystem kann es sich beispielsweise um ein 76.4 GHz Automotive Radarsystem handeln, das aufgrund einer Anordnung beispielsweise an einem Fahrzeug nicht ortsfest ist.

**Patentansprüche**

1. Verfahren zum Erkennen von Niederschlag (5) in einem von Radarstrahlen (4) erfassten Bereich, wobei das Verfahren durch die folgenden Schritte gekennzeichnet ist:

   Senden (401) wenigstens zweier Radarsignale mit nicht oder nur teilweise überlappenden Strahlungskegeln;
   Ermitteln (402) einer ersten mittleren Leistung eines ersten rückgestreuten Radarsignals (501);
   Ermitteln (404) einer zweiten mittleren Leistung eines zweiten rückgestreuten Radarsignals (502);
   Feststellung (406) eines Vorhandenseins von Niederschlag durch Vergleich der ermittelten mittleren Leistungen miteinander,
   **dadurch gekennzeichnet, dass** der Vergleich der mittleren Leistungen unter Berücksichtigung von mindestens einem Gewichtungsfaktor erfolgt, wobei der mindestens eine Gewichtungsfaktor ausgebildet ist, um unterschiedliche Radarantennencharakteristika auszugleichen.

2. Verfahren nach Anspruch 1, **gekennzeichnet durch** einen weiteren Schritt des Ermittelns einer weiteren mittleren Leistung eines weiteren rückgestreuten Radarsignals, wobei die rückgestreuten Radarsignale durch Reflektion von Radarsignalen (4; 560, 562) erzeugbar sind, die von benachbart angeordneten Radarantennen bzw. Sendern (550, 552) ausgesendet werden.

3. Verfahren nach einem der vorstehenden Ansprüche, **dadurch gekennzeichnet, dass** die mittleren Leistungen jeweils für einen objektfreien Abschnitt ($V_{RZ}$) des erfassten Bereichs ermittelt werden.

4. Verfahren nach Anspruch 3, **dadurch gekennzeichnet, dass** die Schritte des Ermittelns folgende Schritte aufweisen:

   Erfassen jeweils einer spektralen Leistungsdichte für jedes rückgestreute Radarsignal (501, 502);
   Integrieren der spektralen Leistungsdichten (31, 34) jeweils über den objektfreien Abschnitt ($V_{RZ}$), um die mittleren Leistungen zu erhalten.

5. Verfahren nach Anspruch 4, **dadurch gekennzeichnet, dass** der objektfreie Abschnitt durch Analyse der spektralen Leistungsdichten (31, 34) der rückgestreuten Radarsignale (501, 502) bestimmt wird, wobei der objektfreie Abschnitt ($V_{RZ}$) einem gemeinsamen Teilbereich der spektralen Leistungsdichten entspricht, in dem keine der spektralen Leistungsdichten einen Peak aufweist, der über ein Grundrauschen (32, 35) der jeweiligen spektralen Leistungsdichten herausragt.

6. Verfahren nach einem der vorstehenden Ansprüche, **dadurch gekennzeichnet, dass** der Vergleich der mittleren Leistungen eine Feststellung einer Übereinstimmung der mittleren Leistungen, insbesondere mittels einer Korrelation, umfasst.

7. Verfahren nach einem der Ansprüche 4 bis 6, wobei das Verfahren ferner durch einen Schritt des Auswertens einer Anhebung (37) des Grundrauschens mindestens einer der spektralen Leistungsdichten (31, 34) gekennzeichnet ist, um eine Dichte von Niederschlag (5) oder eine Radarsignaldämpfung zu bestimmen.

8. Verfahren nach einem der vorstehenden Ansprüche, **dadurch gekennzeichnet, dass** der Niederschlag Regen, Hagel oder Schneefall, ist, dessen Hauptbewegungsrichtung orthogonal zu den Radarstrahlen (4) ist.

9. Verfahren nach einem der vorstehenden Ansprüche, **dadurch gekennzeichnet, dass** ein Long Range Radar-FMCW-Radarsender eingesetzt wird, um einander teilweise überlappende oder nebeneinanderliegende Strahlungskegel zu erzeugen, wobei die rückgestreuten Radarsignale jeweils einem Strahlungskegel zuordnenbar sind.

10. Vorrichtung um alle Schritte eines Verfahrens gemäß einem der Ansprüche 1 bis 9 durchzuführen.

11. Computerprogramm mit Programmcode-Mitteln, um alle Schritte eines Verfahrens gemäß einem der Ansprüche 1 bis 9 durchzuführen, wenn das Computerprogramm auf einem Computer oder einer entsprechenden Rechnereinheit ausgeführt wird.

12. Computerprogrammprodukt mit Programmcode-Mitteln, die auf einem computerlesbaren Datenträger gespeichert sind, um alle Schritte eines Verfahrens nach einem der Ansprüche 1 bis 9 durchzuführen, wenn das Computerprogrammprodukt auf einem Computer oder auf einer entsprechenden Rechnereinheit ausgeführt wird.

**Claims**

1. Method for identification of precipitation (5) in an area which is covered by radar beams (4), with the method being **characterized by** the following steps:

   transmission (401) of at least two radar signals with radiation lobes which do not overlap, or overlap only partially;
   determination (402) of a first mean power of a first back-scattered radar signal (501);
   determination (404) of a second mean power of a second back-scattered radar signal (502);
   detection (406) of the presence of precipitation by comparison of the determined mean powers with one another, **characterized in that** the mean powers are compared taking account of at least one weighting factor, with the at least one weighting factor being designed to compensate for different radar antenna characteristics.

2. Method according to Claim 1, **characterized by** a further step of determination of a further mean power of a further back-scattered radar signal, in which case the back-scattered radar signals can be produced by reflection of radar signals (4; 560, 562) which are transmitted by radar antennas and transmitters (550, 552) which are arranged adjacent.

3. Method according to one of the preceding claims, **characterized in that** the mean powers are each determined for a section ($V_{RZ}$) of the covered area in which there are no objects.

4. Method according to Claim 3, **characterized in that** the determination steps have the following steps:

   detection of in each case one power spectral density for each back-scattered radar signal (501, 502);
   integration of the power spectral densities (31, 34), in each case over the section ($V_{RZ}$) in which there are no objects, in order to obtain the mean powers.

5. Method according to Claim 4, **characterized in that** the section in which there are no objects is determined by analysis of the power spectral densities (31, 34) of the back-scattered radar signals (501, 502), with the section ($V_{RZ}$) in which there are no objects corresponding to a common subarea of the power spectral densities in which none of the power spectral densities have a peak which projects above the background noise (32, 35) of the respective power spectral densities.

6. Method according to one of the preceding claims, **characterized in that** the comparison of the mean powers comprises detection of a match between the mean powers, in particular by means of correlation.

7. Method according to one of Claims 4 to 6, with the method furthermore being **characterized by** a step of evaluation of a peak (37) in the background noise of at least one of the power spectral densities (31, 34), in order to determine a density of precipitation (5) or radar signal attenuation.

8. Method according to one of the preceding claims, **characterized in that** the precipitation is rain, hail or snowfall, whose main moving direction is at right angles to the radar beams (4).

9. Method according to one of the preceding claims, **characterized in that** a long-range radar FMCW radar transmitter is used, in order to produce radiation lobes which partially overlap one another or are located alongside one another, in which case the back-scattered radar signals can each be associated with one radiation lobe.

10. Apparatus for carrying out all the steps of a method according to one of Claims 1 to 9.

11. Computer program having program code means for carrying out all the steps of a method according to one of Claims 1 to 9 when the computer program is run on a computer or a corresponding computer unit.

12. Computer program product having program code means which are stored in a computer-legible data storage medium, in order to carry out all the steps of a method according to one of Claims 1 to 9 when the computer program product is run on a computer or a corresponding computer unit.

**Revendications**

1. Procédé d'identification de précipitations (5) dans une zone balayée par le rayonnement radar (4), le procédé étant **caractérisé par** les étapes suivante :

   émission (401) d'au moins deux signaux radar ayant des cônes de rayonnement qui ne se chevauchent pas ou seulement partiellement ;
   détermination (402) d'une première puissance moyenne d'un premier signal radar (501) rétrodiffusé ;
   détermination (404) d'une deuxième puissance moyenne d'un deuxième signal radar (502) rétrodiffusé ;
   constatation (406) de la présence de précipitations par comparaison des puissances moyennes déterminées entre elles,
   **caractérisé en ce que** le comparaison des puissances moyennes est effectuée en tenant compte d'au moins un facteur de pondération, l'au moins un facteur de pondération étant configuré pour compenser des caractéristiques d'antenne radar différentes.

2. Procédé selon la revendication 1, **caractérisé par** une étape suivante de détermination d'une autre puissance moyenne d'un autre signal radar rétrodiffusé, les signaux radar rétrodiffusés pouvant être produits par la réflexion de signaux radar (4 ; 560, 562) qui sont émis par des antennes radar ou des émetteurs (550, 552) voisins.

3. Procédé selon l'une des revendications précédentes, **caractérisé en ce que** les puissances moyennes sont respectivement déterminées pour une section sans objet ($V_{RZ}$) de la zone balayée.

4. Procédé selon la revendication 3, **caractérisé en ce que** les étapes de détermination présentent les étapes suivante :

   détection à chaque fois d'une densité de puissance spectrale pour chaque signal radar (501, 502) rétrodiffusé ;
   intégration des densités de puissance spectrales (31, 34) à chaque fois sur la section sans objet ($v_{RZ}$) afin d'obtenir les puissances moyennes.

5. Procédé selon la revendication 4, **caractérisé en ce que** la section sans objet est déterminée par analyse des densités de puissance spectrales (31, 34) des signaux radar (501, 502) rétrodiffusés, la section sans objet ($V_{RZ}$) correspondant à une zone partielle commune des densités de puissance spectrales dans laquelle aucune des densités de puissance spectrales ne présente une crête qui dépasse au-dessus d'un bruit de fond (32, 35) des densités de puissance spectrales correspondantes.

6. Procédé selon l'une des revendications précédentes, **caractérisé en ce que** la comparaison des puissances moyennes inclut une constatation d'une concordance des puissances moyennes, notamment au moyen d'une corrélation.

7. Procédé selon l'une des revendications 4 à 6, le procédé étant en outre **caractérisé par** une étape d'interprétation d'un rehaussement (37) du bruit de fond d'au moins l'une des densités de puissance spectrales (31, 34), afin de déterminer une densité de précipitations (5) ou un affaiblissement du signal radar.

8. Procédé selon l'une des revendications précédentes, **caractérisé en ce que** les précipitations sont de la pluie, de la grêle ou des chutes de neige dont le sens de déplacement principal est orthogonal au rayonnement radar (4).

9. Procédé selon l'une des revendications précédentes, **caractérisé en ce qu'**un émetteur radar FMCW à longue portée est utilisé afin de produire des cônes de rayonnement qui se chevauchent partiellement l'un l'autre ou qui sont disposés l'un à côté de l'autre, les signaux radar rétrodiffusés pouvant respectivement être associés à un cône de rayonnement.

10. Dispositif pour exécuter toutes les étapes d'un procédé selon l'une des revendications 1 à 9.

11. Programme informatique comprenant des moyens de code de programme pour exécuter toutes les étapes d'un procédé selon l'une des revendications 1 à 9 lorsque le programme informatique est exécuté sur un ordinateur ou une unité de calcul correspondante.

12. Produit de programme informatique comprenant des moyens de code de programme qui sont enregistrés sur un support de données lisible pour ordinateur pour exécuter toutes les étapes d'un procédé selon l'une des revendications 1 à 9 lorsque le produit de programme informatique est exécuté sur un ordinateur ou une unité de calcul correspondante.

Fig. 1

**Fig. 2**

**Fig. 3**

Fig. 4

```
┌─────────────────────────────┐
│                             │─── 401
└─────────────────────────────┘
              │
              ▼
┌─────────────────────────────┐
│                             │─── 402
└─────────────────────────────┘
              │
              ▼
┌─────────────────────────────┐
│                             │─── 404
└─────────────────────────────┘
              │
              ▼
┌─────────────────────────────┐
│                             │─── 406
└─────────────────────────────┘
```

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 1993002370 A1
- EP 1229348 A1
- JP 07248830 A
- JP 10048333 A
- US 5028929 A

**In der Beschreibung aufgeführte Nicht-Patentliteratur**

- **SENBOKUYA Y et al.** Development of the space-borne dual frequenca precipitation radar for the global precipitation measurement mission. *GEOSCIENCE AND REMOTE SENSING SYMPOSIUM; 2004. IGARSS #04. PROCEEDINGS. 2004 IEEE INTERNATIONAL ANCHORAGE,* 20. September 2004, vol. 5, ISBN 0-7803-8742-2, 3570-3573